# EUROPEAN PATENT SPECIFICATION

(11) **EP 2 679 871 B1**
(45) Date of publication and mention of the grant of the patent: **23.10.2019**
(21) Application number: 13174181.1
(22) Date of filing: 28.06.2013
(51) Int. Cl.: F16L 5/00, F16L 5/14, H02G 3/08, H02G 15/013, F16L 5/10, H02G 3/22

(54) **DEVICE FOR LEADING THROUGH HOSES, PIPES, CABLES, AND THE LIKE**
VORRICHTUNG ZUR FÜHRUNG SCHLÄUCHE, ROHRE, KABEL UND ÄHNLICHES
DISPOSITIF POUR LE CHEMINEMENT DE TUYAUX, CONDUITES, CABLES OU ÉQUIVALENT

(30) Priority: 29.06.2012 SE 1250733
(43) Date of publication of application: 01.01.2014
(73) Proprietor: Foolproof AB, 741 71 Knivsta (SE)
(72) Inventor: Gerger, Patrik, 194 66 UPPLANDS VÄSBY (SE)
(74) Representative: Brann AB

(56) References cited:
- EP-A1- 1 219 881
- EP-A1- 1 835 215
- GB-A- 2 448 049
- US-A- 2 922 836
- US-A1- 2004 222 598
- US-A1- 2012 137 586

## Description

### TECHNICAL FIELD OF THE INVENTION

The invention concerns a device arranged for leading hoses, pipes, or cables through an opening in a wall or the like, which delimits a space that should be protected against leakage water

### BACKGROUND OF THE INVENTION AND PRIOR ART

The invention has its background in an increasing requirement of protection against moisture damage caused by leaky heating, ventilation, and sanitary installations, such as leaky couplings, fittings, and conduits for intake water and waste water in dwelling kitchens, e.g. With the purpose of preventing leakage water from spreading from a space protected against leakage to adjacent spaces, via conduits and conduit lead-throughs, it has previously been proposed that hoses, pipes, or cables should be introduced into the protected space via particularly formed hose lead-throughs that are arranged to seal around the hose or the like.

Previously known examples of such hose lead-throughs are found in SE 530508 C2 and SE 530636 C2, which both are in the form of housings in two pieces having holders formed as sleeves, which clasps the hose when bringing together the housing parts.

EP 1219881 discloses a blind mounting for a wall which comprises a threaded tubular base with flexible radial tabs which fits into a hole in the wall. A top section screws on to this, bending the tabs down to form a bearing surface, against which its lower surface rests. A flexible collar fitted on the bearing surface of the tabs and is compressed when the top section is screwed down.

A disadvantage of these known hose lead-throughs is the high requirements of manufacturing accuracy and accurate mounting that should be met to achieve sealing between the housing parts and guarantee a leakage-proof lead-through.

### SUMMARY OF THE INVENTION

Therefore, the present invention aims at providing a device for the introduction of hoses, pipes, cables, and the like into a space, by which device a satisfying sealing around the hose or the like can be guaranteed also without very close manufacturing tolerances having to be observed or exact mounting steps having to be applied.

This object is achieved according to the invention by a device according to the technical features of claim 1.

The diaphragm may advantageously be a thermoplastic elastomer. Thermoplastic elastomers or thermoplastic rubbers usually go under the designation TPE and belong to the group of copolymers or consist of mixtures of polymers having thermoplastic and elastomeric properties. One of the features for thermoplastic elastomers is their ability to stretch and return to original shape when the load ceases. Different grades of the material are commercially available from several manufacturers and with varying properties from extremely soft and gelatinous materials having a hardness of 0 Shore A up to very stiff materials having a hardness of, for instance, 65 Shore D. Thermoplastic elastomers are easy to machine, and products of these materials can be manufactured by injection moulding.

For the diaphragms of the invention, preferably a soft grade in the lower part of the Shore scale is selected, having a high stretchability without being permanently deformed, and which therefore essentially return to original shape when the tension load ceases. By the expression "high stretchability", in this connection it should be understood an ability of reversible expansion of a lead-through notch for the formation of an opening the greatest size of which amounts to at least 3-4 times the size of the lead-through opening in its sealing state around an object introduced in the lead-through opening. This may be elucidated by the following example: in sealing around an object having the diameter 20 mm, the stretchability of the diaphragm should preferably allow the opening through the diaphragm for the introduction of the object to be widened to the order of 60-80 mm, without the occurrence of a lasting deformation of the diaphragm.

In this way, the memory function of a material that after tension aims at resuming its original shape is utilized in the invention, and which in this aim provides a sealing around an object introduced through a temporary widened opening through the diaphragm. An exact dimensional fit of the lead-through notch to the size of the object is neither required for the diaphragm to seal around the object, because the original lead-through notch is always smaller than the size/diameter of the object, and the diaphragm therefore exerts a gripping force around the object.

The frame suitably consists of a polymer material such as polythene plastic, propylene plastic, or ABS plastic. The frame and the diaphragm are advantageously united by a co-casting procedure, by which a mounting step can be avoided and the manufacture can be made efficient.

In a preferred embodiment, the device consists of said frame with the diaphragm as well as of a holder that is introducible into the frame and is in the form of an inset that is effective for position locking hoses, pipes, or cables lead through. In this embodiment, the mounting is facilitated by the fact that all hoses, pipes, or cables can be introduced individually through the diaphragm, before their mutual positions are fixed in the holder, after which the holder and the frame are united to accomplish the device, which thereupon, as a whole, can be fixed in the wall opening.

In a preferred embodiment, the holder in the introduced position in the frame entails that the diaphragm is prestressed into an elevated position above the frame. In this embodiment, it is achieved that possibly occurring water on the upper side of the diaphragm drains off toward the periphery of the diaphragm and device, away from the lead-throughs in the diaphragm.

Without being a condition for the realization of the invention, the diaphragm, the frame, and the holder are suitably given a circular shape, for fitting into a circular opening through a wall or the like. It will be appreciated that this embodiment entails a simple recession of a corresponding opening through the wall.

Upon introduction of the holder into the frame, the holder is fixable in the frame by means of lock members acting between the frame and the holder. The united parts are collectively fixable in a wall opening by means of lock members formed on the frame or on the holder.

The holder has at least one seat for a hose, or for a pipe, or for a cable, and said seat is suitably made as a sleeve having a slot through the wall of the sleeve for lateral introduction of the hose/pipe/cable into the sleeve. At least one of said sleeves has an inner flange for the engagement with a knurled outside of a pipe or a hose, such as a drain hose.

The lead-through notch is preferably made as depressions or through slots laid in a cross pattern in the diaphragm, each one of the four arms of the cross being terminated with a transverse depression or through slot. The embodiment with the transverse slot or depression increases the ability of the diaphragm to resist crack formation and prevents propagation of the opening through the diaphragm upon maximum expansion of the same.

Each lead-through notch is preferably situated in a delimited sub-area of the diaphragm that has a first thickness, while the surrounding area of the diaphragm has a second and greater thickness. The surrounding area of the diaphragm may be 2-20 times thicker than the sub-area with lead-through notch.

In a preferred embodiment, the diaphragm has a peripheral edge area having a concave under side, which upon mounting is brought in contact with the wall or the like.

The diaphragm typically has at least three circular sub-areas having lead-through notches for leading through objects of mutually different diameters, and provides, in this embodiment, a device that is arranged for leading through intake water conduit, waste water conduit, and electric cable.

### BRIEF DESCRIPTION OF THE DRAWINGS

Embodiment examples of the invention will be explained in more detail below, reference being made to the appended drawings, wherein
Figs. 1a-1c show parts included in the device in perspective and in exploded view,
Fig. 2 shows the parts of the device joined in a reversed perspective view, and
Fig. 3 shows a cross-section through an elastic diaphragm included in the device.

### DETAILED DESCRIPTION OF PREFERRED EMBODIMENT EXAMPLES

In a preferred embodiment example, a device according to the invention comprises an elastic diaphragm 10, a frame 20, and a holder 30. As in the shown embodiment example, all may have a circular or circular-cylindrical shape, but may alternatively have another shape such as oval or polygonal.

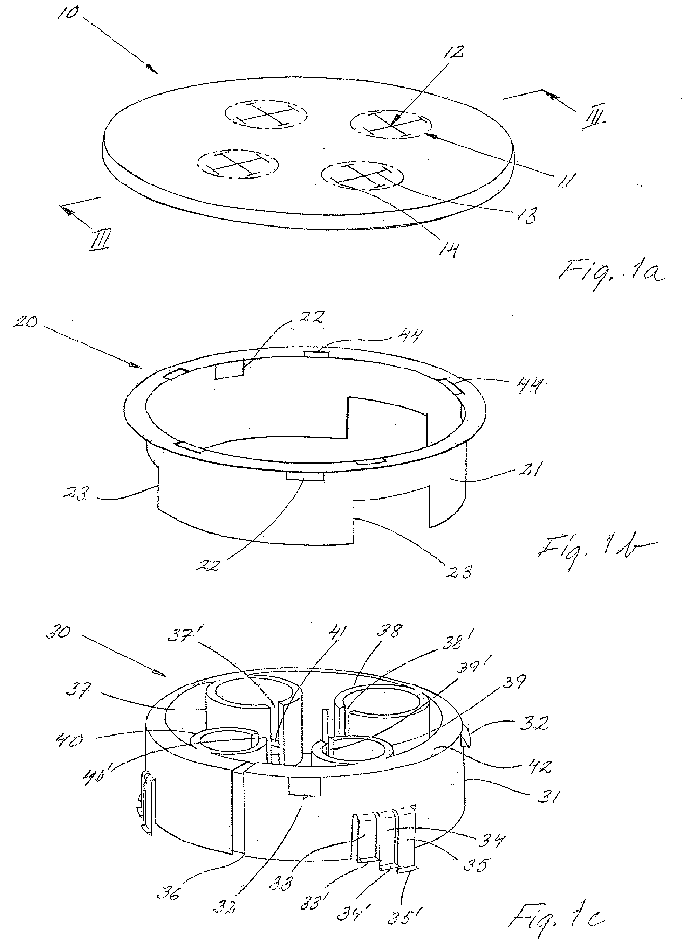

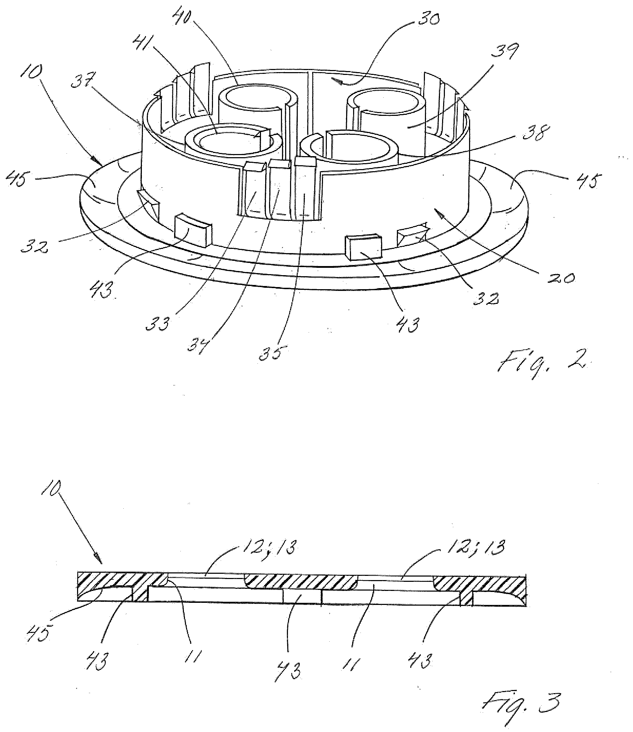

With reference to Fig. 1 and Fig. 3, the diaphragm 10 is an essentially plane, elastic sheet or membrane preferably made of a thermoplastic elastomer, in which areas 11 of reduced thickness are formed and surrounded by areas of greater thickness. In said areas 11 of reduced thickness, notches 12 are formed for leading through an object, such as a hose, a pipe, or a cable, under tension of the diaphragm. In the preferred embodiment, the lead-through notches 12 are made as crosses each one of the cross arms 13 of which is terminated by a transverse marking 14 forming a tear stop upon expansion of the lead-through notch. The lead-through notches 12 may be made as through grooves or as depressions intended to burst upon penetration. The lead-throughs 12 may alternatively also be in the form of locally broken through depressions in the elastomeric material. Of the four lead-through notches 12 of the embodiment example, one may be intended for leading through an intake water conduit, one be intended for leading through a waste water conduit, and one be intended for leading through an electric cable.

The diaphragm 10 is supported by the frame 20, which suitably is made from a plastic or polymer material. The frame 20 and the diaphragm 10 may advantageously be integrated in the production by a co-casting procedure.

The frame 20 has a wall 21, in the embodiment example in the form of a circular-cylindrical wall 21, in which recesses 22 are formed and intended for locking engagement from lugs, which are arranged on the holder 30 in a way explained in more detail below. The frame 20 has in addition recesses 23 through which gripping means, likewise arranged on the holder 30, extend for effective engagement and locking of the device in an opening recessed for the purpose.

The holder 30, as well as the frame 20, has a circular-cylindrical wall 31 and is dimensioned to be introduced into the frame 20 in a coaxial relationship. In the outside of the wall 31, lugs 32 are formed for engagement in the above-mentioned recesses 22 in the assembled state of the frame and holder, as shown in Fig. 2. Also in the outside of the wall 31, a number of tongues 33, 34, and 35 are arranged, which in the introduced position of the holder in the frame 20 assume a position right in front of the recesses 23 of the frame. Lugs 33', 34', and 35' formed in the end of the tongues 33-35 form gripping means, which extend through the recesses 23 of the frame for engagement with the wall or the corresponding panel in which the device is to be mounted. The tongues 33-35 of the embodiment example are of different lengths and are in this way adapted for the fixation of the device in panels of different thickness.

The holder 30 has a certain bendability and elasticity and is suitably made from a plastic material, such as a propylene plastic, a polythene plastic, or ABS plastic, e.g. A slot 36 opens the holder and allows lateral introduction of objects to be fixed in the holder via the slot 36 temporary widened for the purpose. From the inside of the wall 31 of the holder, a number of sleeves 37, 38, 39, and 40 extend inward toward the centre of the holder. Essentially in the same way as in the wall of the holder, the sleeves 37-40 have a longitudinal slot 37'-40' for lateral introduction of and receipt of an object. The sleeves form seats having an inner diameter that is adapted to the diameter of the object in question so that the sleeve exerts a gripping force around the object when this is introduced in the sleeve. In addition, a projection, such as a flange 41, may be formed on the inside of the sleeve for the engagement with an externally knurled pipe or a hose. In that connection, the sleeve 38 may, as in the embodiment example, be dimensioned to hold a waste water hose, the sleeve 39 be dimensioned to hold an intake water hose, and the sleeve 40 be dimensioned to hold an electric cable.

For the diaphragm 10 in mounted position to hold a shape that promotes runoff of water, in a preferred embodiment example, the holder is suitably formed with a circumferential and somewhat elevated edge 42, which, in the introduced position of the holder in the frame 20 determined by the engagement of the lugs 32 in the recesses 22, prestresses the diaphragm 10 so that the same obtains a somewhat convex shape.

In a preferred embodiment example, the diaphragm is, in its under side, formed with tongues 43, which can be introduced into openings 44 or other cavities that are formed in the frame 20 for the purpose. The assembly consisting of the frame and the diaphragm may in that connection be prepared in several steps, the diaphragm first being cast separately and then mounted in the frame, after which the diaphragm being completed in a second casting step made on the outside of the frame. By the fact that the diaphragm in this way is co-cast with the frame, the diaphragm is secured mechanically and cannot come loose from the frame.

As may be best seen in Fig. 2, the diaphragm 10 has a flange that radially protrudes and runs around outside the frame 20 and that is formed of a peripheral edge area 45 of the diaphragm. The under side of the flange 45 is advantageously cup-shaped in such a way that the thickness of the diaphragm increases successively toward the periphery of the diaphragm. By this embodiment, it is guaranteed that the diaphragm seals against the edge area around the opening, when the diaphragm, the frame, and the holder jointly are pressed into the opening in the mounting, until some one of the lugs 33'-35' of the holder grips against the edge around the opening and the diaphragm is pressed against the edge area of the opening on the opposite side of the wall or the like.

Upon mounting, each one of the objects in question may be introduced separately in the diaphragm 10 through the lead-through notches 12 temporary widened for the purpose, after which all objects are introduced into the holder 30 and fixed in the sleeves 37-40 of the holder. Next, the diaphragm 10 is brought integrally with the frame 20 down over the holder 30 until the lugs 32 snap into the recesses 22 of the frame. The entire device is then brought into the opening recessed for the purpose until the lugs of the tongues 33-35 are attached by snap action on the under side/outside of the wall in question or the corresponding panel.

By the fact that the holder 30, in which the hoses are fixed, is flexible and can be arranged prestressed outward against the inside of the frame 20 in the mounted state of the parts, the device will be stable and the result is a united assembly and a homogeneous product. The holder has outward facing lugs 32 in its outside, which lock the frame with the diaphragm and prevent the frame and the diaphragm from being pulled up out of the opening when the device is mounted. The same lugs 32 also prevent the holder 30 from moving downward in relation to the frame 20, which, by means of the flange 45 radially protruding from the diaphragm, "braces" against the edge area around the opening. This is also an important detail for holding the hoses in the correct position and for attaining optimum sealing of the diaphragm against the hoses.

It should be appreciated that even if reference herein is made to a wall, the device may just as well be mounted in a floor panel or any another panel separating a space that should be protected from leakage water from an adjacent space, and the invention is accordingly not limited to an application in what is specifically considered to be a wall.

## Claims

1. Device for the introduction of hoses, pipes, or cables into a space, which device comprises a frame (20) and an elastic diaphragm (10), which diaphragm (10) has at least one lead-through notch (12) for leading through the hose, pipe, or cable, as well as is supported by the frame (20), which is arranged for the fixation of the diaphragm (10) in covering relationship to an opening through a wall or the like delimiting said space, the device further comprising a holder (30) in which the hose, pipe, or cable is fixable, which holder is introduced into the frame (20) and fixed in the frame (20) by means of lock members (32) acting between the frame (20) and the holder (30) to form united parts, and the united parts are collectively fixable in the opening by means of lock members (33', 34', 35') arranged on the frame (20) or on the holder (30), and **characterized by** the holder (30) being openable for the lateral introduction of the hose, pipe or cable through a slot (36) into the wall of the holder (30) .

2. Device according to claim 1, wherein the diaphragm (10) is a thermoplastic elastomer and the frame (20) consists of a polymer material, and the frame and the diaphragm are united by a co-casting procedure.

3. Device according to claim 1 or 2, wherein the holder (30) in the introduced position in the frame (20) prestresses the diaphragm (10) into an elevated position above the frame.

4. Device according to claim 1, wherein the holder has at least one seat for the retention of a hose, a pipe, or a cable, and said seat is made as a sleeve (37, 38, 39, 40) having a slot through the wall of the sleeve for lateral introduction of the hose/pipe/cable into the sleeve.

5. Device according to claim 4, wherein at least one of said sleeves has an inner flange (41) for the engagement with a knurled outside of a pipe or a hose.

6. Device according to any one of the preceding claims, wherein said lead-through notch (12) is made as depressions or through slots laid in a cross pattern in the diaphragm, each one of the four arms (13) of the cross being terminated with a transverse depression or through slot (14).

7. Device according to any one of the preceding claims, wherein said at least one lead-through notch (12) is situated in a delimited sub-area (11) of the diaphragm (10) that has a first thickness, while the surrounding area of the diaphragm has a second and greater thickness.

8. Device according to claim 7, wherein the surrounding area of the diaphragm is 2-20 times thicker than the sub-area (11) having lead-through notch (12).

9. Device according to any one of the preceding claims, wherein the diaphragm (10) has at least three circular sub-areas (11) having lead-through notches (12) for leading through objects of mutually different diameters.

10. Device according to any one of the preceding claims, wherein the diaphragm (10) has a peripheral edge area (45) having a concave under side.

## Patentansprüche

1. Vorrichtung für das Einführen von Schläuchen, Rohren oder Kabeln in einen Raum, welche Vorrichtung einen Rahmen (20) und eine elastische Membran (10) umfasst, welche Membran (10) zumindest eine durchführende Kerbe (12) zum Durchführen des Schlauchs, Rohrs oder Kabels aufweist, wie auch von dem Rahmen (20) gestützt ist, der zur Befestigung der Membran (10) in abdeckendem Verhältnis zu einer Öffnung durch eine Wand oder dergleichen, die den Raum begrenzt, angeordnet ist, die Vorrichtung weiter umfassend eine Halterung (30), in der der Schlauch, das Rohr oder Kabel befestigbar ist, welche Halterung in den Rahmen (20) eingeführt und im Rahmen (20) durch Verriegelungselemente (32) befestigt ist, die zwischen dem Rahmen (20) und der Halterung (30) wirken, um vereinte Teile zu bilden, und die vereinten Teile gemeinsam in der Öffnung durch Verriegelungselemente (33', 34', 35') befestigbar sind, die am Rahmen (20) oder an der Halterung (30) angeordnet sind, und **dadurch gekennzeichnet, dass** die Halterung (30) für das seitliche Einführen des Schlauchs, Rohrs oder Kabels durch einen Schlitz (36) in die Wand der Halterung (30) zu öffnen ist.

2. Vorrichtung nach Anspruch 1, wobei die Membran (10) ein thermoplastisches Elastomer ist und der Rahmen (20) aus einem Polymermaterial besteht und der Rahmen und die Membran durch eine gemeinsame Gussprozedur vereint werden.

3. Vorrichtung nach Anspruch 1 oder 2, wobei die Halterung (30) in der eingeführten Position im Rahmen (20) die Membran (10) in eine erhöhte Position über dem Rahmen vorspannt.

4. Vorrichtung nach Anspruch 1, wobei die Halterung zumindest einen Sitz zum Zurückhalten eines Schlauchs, Rohrs oder Kabels aufweist und der Sitz als eine Hülse (37, 38, 39, 40) gebildet ist, die einen Schlitz durch die Wand der Hälse zum seitlichen Einführen des Schlauchs/Rohrs/Kabels in die Hülse aufweist.

5. Vorrichtung nach Anspruch 4, wobei zumindest eine der Hülsen einen Innenflansch (41) für den Eingriff mit einer gerändelten Außenseite eines Rohrs oder eines Schlauchs aufweist.

6. Vorrichtung nach einem der vorstehenden Ansprüche, wobei die durchführende Kerbe (12) als Vertiefungen oder durchgehende Schlitze gebildet ist, die in einem Kreuzmuster in der Membran gelegt sind, wobei jeder der vier Arme (13) des Kreuzes mit einer querverlaufenden Vertiefung oder einem querverlaufenden durchgehenden Schlitz (14) endet.

7. Vorrichtung nach einem der vorstehenden Ansprüche, wobei die zumindest eine durchführende Kerbe (12) in einem begrenzten Teilbereich (11) der Membran (10) gelegen ist, der eine erste Dicke aufweist, während der umgebende Bereich der Membran eine zweite und größere Dicke aufweist.

8. Vorrichtung nach Anspruch 7, wobei der umgebende Bereich der Membran 2-20 Mal dicker als der Teilbereich (11) ist, der die durchführende Kerbe (12) aufweist.

9. Vorrichtung nach einem der vorstehenden Ansprüche, wobei die Membran (10) zumindest drei kreisförmige Teilbereiche (11) mit durchführenden Kerben (12) zum Durchführen von Objekten wechselseitig unterschiedlicher Durchmesser aufweist.

10. Vorrichtung nach einem der vorstehenden Ansprüche, wobei die Membran (10) einen peripheren Randbereich (45) mit einer konkaven Unterseite aufweist.

## Revendications

1. Dispositif pour l'introduction de tuyaux, conduites, ou câbles dans un espace, le dispositif comprenant un cadre (20) et une membrane élastique (10), la membrane (10) présentant au moins une encoche traversante (12) pour mener à travers le tuyau, la conduite, ou le câble, ainsi qu'étant soutenu par le cadre (20), qui est agencé pour la fixation de la membrane (10) en relation de recouvrement à une ouverture à travers une paroi ou analogues délimitant ledit espace, le dispositif comprenant en outre un support (30) dans lequel le tuyau, la conduite, ou le câble peut être fixé, le support étant introduit dans le cadre (20) et fixé dans le cadre (20) au moyen d'éléments de verrouillage (32) agissant entre le cadre (20) et le support (30) pour former des parties unies, et les parties unies peuvent être collectivement fixées dans l'ouverture au moyen d'éléments de verrouillage (33', 34', 35') agencés sur le cadre (20) ou sur le support (30), et **caractérisé en ce que** le support (30) peut être ouvert pour l'introduction latérale du tuyau, de la conduite ou du câble à travers une fente (36) dans la paroi du support (30).

2. Dispositif selon la revendication 1, dans lequel la membrane (10) est un élastomère thermoplastique et le cadre (20) consiste en un matériau polymère, et le cadre et la membrane sont unis par une procédure de co-coulée.

3. Dispositif selon la revendication 1 ou 2, dans lequel le support (30) dans la position introduite dans le cadre (20) précontraint la membrane (10) dans une position élevée au-dessus du cadre.

4. Dispositif selon la revendication 1, dans lequel le support présente au moins un siège pour la retenue d'un tuyau, d'une conduite ou d'un câble, et ledit siège est fait comme un manchon (37, 38, 39, 40) présentant une fente à travers la paroi du manchon pour une introduction latérale du tuyau/conduite/câble dans le manchon.

5. Dispositif selon la revendication 4, dans lequel au moins un desdits manchons présente une bride intérieure (41) pour la mise en prise avec un extérieur moleté d'une conduite ou d'un tuyau.

6. Dispositif selon l'une quelconque des revendications précédentes, dans lequel ladite encoche traversante (12) est faite comme des creux ou des fentes traversantes situés dans un motif de croix dans la membrane, chacun des quatre bras (13) de la croix étant terminés par un creux transversal ou une fente traversante (14).

7. Dispositif selon l'une quelconque des revendications précédentes, dans lequel ladite au moins une encoche traversante (12) est située dans une sous-région délimitée (11) de la membrane (10) qui présente une première épaisseur, tandis que la région d'encadrement de la membrane présente une seconde épaisseur plus grande.

8. Dispositif selon la revendication 7, dans lequel la région d'encadrement de la membrane est entre 2-20 fois plus épaisse que la sous-région (11) présentant une encoche traversante (12).

9. Dispositif selon l'une quelconque des revendications précédentes, dans lequel la membrane (10) présente au moins trois sous-régions circulaires (11) présentant des encoches traversantes (12) pour mener à travers des objets de diamètres mutuellement différents.

10. Dispositif selon l'une quelconque des revendications précédentes, dans lequel la membrane (10) présente une région de bord périphérique (45) présentant un côté inférieur concave.
